# EUROPÄISCHE PATENTSCHRIFT

(11) **EP 1 183 394 B1**
(45) Veröffentlichungstag und Bekanntmachung des Hinweises auf die Patenterteilung: **23.10.2002**
(21) Anmeldenummer: 00922313.2
(22) Anmeldetag: 05.04.2000
(51) Int. Cl.: C21B 3/06, C21B 3/04

(54) **VERFHAREN ZUM ZERKLEINERN VON SCHLACKEN SOWIE VORRICHTUNG ZUR DURCHFÜHRUNG DIESES VERFAHRENS**
METHOD OF REDUCING SLAGS IN SIZE AND DEVICE FOR CARRYING OUT SAID METHOD
PROCEDE POUR BROYER DES SCORIES ET DISPOSITIF POUR METTRE LEDIT PROCEDE EN OEUVRE

(30) Priorität: 09.04.1999 AT 63299
(43) Veröffentlichungstag der Anmeldung: 06.03.2002
(73) Patentinhaber: Holcim Ltd., 8645 Jona (CH)
(72) Erfinder: EDLINGER, Alfred, CH-5400 Baden (CH)
(74) Vertreter: Haffner, Thomas M., Dr.
(86) Internationale Anmeldenummer: AT0000079
(87) Internationale Veröffentlichungsnummer: WO00061820

(56) Entgegenhaltungen:
- EP-A- 0 370 971
- EP-A- 0 913 363
- DE-A- 4 200 341
- US-A- 4 340 463
- US-A- 5 319 176
- PATENT ABSTRACTS OF JAPAN vol. 004, no. 049 (M-007), 15. April 1980 (1980-04-15) & JP 55 017071 A (EBARA INFILCO CO LTD), 6. Februar 1980 (1980-02-06)
- PATENT ABSTRACTS OF JAPAN vol. 011, no. 060 (C-405), 24. Februar 1987 (1987-02-24) & JP 61 218690 A (MITSUBISHI HEAVY IND LTD), 29. September 1986 (1986-09-29)
- CHEMICAL ABSTRACTS, vol. 95, no. 2, 13. Juli 1981 (1981-07-13) Columbus, Ohio, US; abstract no. 11643z, HITACHI: "granulationof molten blast-furnace slag" Seite 284; Spalte 95; XP000182183 & JP 55 167161 A (HITACHI) 26. Dezember 1980 (1980-12-26)

## Beschreibung

Die Erfindung bezieht sich auf ein Verfahren zum Zerkleinern von Schlacken, bei welchem die Schlacken geschmolzen und in einem Kühlraum zerstäubt und granuliert werden sowie auf eine Vorrichtung zur Durchführung dieses Verfahrens.

Zum Zerkleinern von schmelzflüssigem Material ist es bereits bekanntgeworden, die Schlackenschmelze mit Druckwasser zu beaufschlagen und gemeinsam mit zumindest einem Teil des gebildeten Dampfes auszutragen. Metallurgische Schlacken geeigneter chemischer Zusammensetzung werden vielfach granuliert, daß heißt aus dem Schmelzfluß heraus mit Wasser abgeschreckt, mit dem Ziel, durch schnelle Erstarrung eine Kristallisation weitgehend zu verhindern und stattdessen eine amorphe, glasige Struktur der Granalien zu erzielen. Ein solches Granulat ist ein wertvoller Rohstoff zur Herstellung hydraulischer Bindemittel. Die Herstellung von Bindemitteln erfordert in der Regel weitere Schritte, wie beispielsweise die Trocknung und die Feinmahlung des Granulats und damit weitere energieaufwendige Prozesse.

Für die unmittelbare Verarbeitung schmelzflüssiger Schlacken wurde bereits eine Reihe von Verfahren und Vorrichtungen vorgeschlagen. Insbesondere in der AT-400 114 wurde ein derartiges Verfahren zum Granulieren und Zerkleinern von schmelzflüssigem Material und Mahlgut vorgeschlagen, bei welchem die Schmelze in einer Mischkammer unter Druck eingebracht wird und in die Mischkammer Druckwasserdampf oder Wasserdampfgemische eingedüst werden. Über einen Diffusor kommt es in der Folge zu einem raschen Ausstoß der erstarrten Partikel unter Ausnutzung der kinetischen Energie. Die kinetische Energie wurde hiebei zur zerkleinerung herangezogen, wobei der Austrittsstrahl des Diffusors, beispielsweise gegen eine Prallplatte oder einen Austrittsstrahl eines weiteren Diffusors gerichtet werden konnte.

Aus der österreichischen Anmeldung A 1826/97 ist bereits ein weiteres Verfahren der eingangs genannten Art bekanntgeworden, mit welchem eine H₂S-Entgasung im wesentlichen unterdrückt werden konnte. Bei diesem bekannten Verfahren wurde die flüssige Schlacke aus einem Schlackentundish in frei fließendem Strahl in eine Granulationskammer eingebracht, wobei gegen den Schlackenstrahl Druckwasserstrahlen gerichtet werden. Der Schlackentundish mußte bei dieser Ausbildung druckfest verschlossen werden, wobei es weiters bereits bekannt war, flüssige Schlacken aus einem Schlackentundish durch Einpressen eines Treibstrahles in den Bereich der Austrittsöffnung aus dem Tundish in die nachfolgende Expansions- bzw. Granulationskammer zu expandieren.

Alle bekannten Einrichtungen setzten allerdings bereits flüssige, geschmolzene Schlacken voraus. Ein nicht unerheblicher Teil von Schlacken, welcher in der Folge in Mühlen vermahlen werden mußte, liegt allerdings in fester, mehr oder minder granulierter Form vor, und eine Reihe von Schlacken fallen in ungranulierter Form an und erstarren teilweise amorph, größtenteils aber kristallin, sodaß der hierfür erforderliche Mahlaufwand in der Regel relativ hoch ist und für die Zementanwendung unbrauchbare kristalline Produkte gebildet werden. Derartige feste Schlacken weisen in der Regel nicht unmittelbar eine für die Erzielung gewünschte hydraulische Eigenschaften geeignete Zusammensetzung auf und sind je nach Provenienz auch mehr oder minder schlecht mahlbar.

Die Erfindung zielt nun darauf ab, ein Verfahren zum Zerkleinern von derartigen festen Schlacken oder Schlackenteilchen zu schaffen, mit welchem es in einfacher Weise gelingt, die gewünschte Schlackenzusammensetzung und Schlackenkonsistenz einzustellen und eine Zerkleinerung ohne aufwendigen Mahlvorgang mit kleinbauenden Aggregaten zu erzielen. Die Erfindung ist in dem Ansprüchen 1-8 definiert Zur Lösung der oben genannten. Aufgabe ist das erfindungsgemäße Verfahren im wesentlichen dadurch gekennzeichnet, daß die festen Schlacken in einem druckfest verschließbaren Schmelzzyklon erschmolzen werden und daß die geschmolzene Schlacke unmittelbar aus dem Schmelzzyklon in einen Kühlraum ausgestoßen wird, wobei der Kühlraum unter geringerem Druck als der Schmelzzyklon gehalten wird. Dadurch, daß ein Schmelzzyklon zum Einsatz gelangt, gelingt es in einfacher Weise einen derartigen Schmelzzyklon druckfest zu verschließen und in einer Weise mit Rohmaterial in fester Form zu beschicken, welche unmittelbar die gewünschte Schlackenzusammensetzung ergibt. Dadurch, daß nun der Schmelzzyklon unmittelbar mit dem nachgeschalteten Kühlraum verbunden ist, gelingt es erfindungsgemäß so vorzugehen, daß die geschmolzene Schlacke unmittelbar aus dem Schmelzzyklon in einen Kühlraum ausgestoßen wird, wobei es für diesen Ausstoß lediglich erforderlich ist, den Kühlraum unter geringerem Druck als den Schmelzzyklon zu halten.

Mit Vorteil kann das erfindungsgemäße Verfahren so verwendet werden, daß der Schmelzzyklon mit Abfallbrennstoffen, wie z.B. Abfällen aus der Papierindustrie, beheizt wird. Dadurch, daß im Schmelzzyklon ein Druck von beispielsweise 2 bis 10bar aufrechterhalten wird, können auch minderwertige Brennstoffe zum Einsatz gelangen, so daß Schwefelwasserstoffe in den schmelzflüssigen Partikeln gelöst bleiben oder gemeinsam mit diesen in den Kühlraum ausgetragen werden. In den Schmelzzyklon kann beispielsweise Schmelzasche kalorischer Kraftwerke eingebracht werden, wobei mit Vorteil auch Abfallstoffe aus der Papierindustrie, d.h. kaolinhältige Abfälle, die mit Papierfasern als Energieträger verunreinigt sind, zum Einsatz gelangen können. Im Schmelzzyklon kann hier unmittelbar die gewünschte Synthese bestimmter Bindemittelsysteme in Bezug auf ihre chemische Zusammensetzung vorbereitet werden, wobei beispielsweise bei puzzolanischen Bindemittelsystemen eine Basizität von CaO zu SiO₂ von kleiner als 0,2 und bei basischen Systemen eine entsprechend höhere Basizität von über 1 eingestellt werden kann. Mit Vorteil wird das erfindungsgemäße Verfahren so durchgeführt, daß die Körnung der im Schmelzzyklon eingesetzten Schlacken oder Aschen kleiner 10 mm, vorzugsweise kleiner 4 mm gewählt wird. Insbesondere bei Verwendung von hoch kohlenstaubbelasteter Schmelzasche aus konventionellen kalorischen Kraftwerken kann hiebei der Kohlenstaubanteil für Heißzwecke im Schmelzzyklon nutzbar gemacht werden, so daß eine Reihe von Abfallstoffen sinnvoll verwendet werden kann. Speziell mehr oder minder aufwendige Konstruktionen für einen Schlackentundisch, in welchem die Schlacken schmelzflüssig gehalten wird, können auf die Art und Weise vermieden werden, da das im Schmelzzyklon erschmolzene Material unmittelbar in den Kühl- bzw. Granulierraum ausgestoßen werden kann und dort durch entsprechendes Abschrecken überaus fein zerstreut und zumeist bereits in der gewünschten Weise zerkleinert werden kann.

Die erfindungsgemäße Vorrichtung zur Durchführung des Verfahrens ist hiebei im wesentlichen gekennzeichnet durch einen Schmelzzyklon mit einer sich von einer engsten Stelle zur Mündung vergrößernden Austragsöffnung, an welche eine Kühlkammer druckfest angeschlossen, insbesondere angeflanscht ist. Die spezielle Ausgestaltung der Austrittsoffnung des Schmelzzyklons führt hiebei zu hoher Turbulenz im Bereich des Austrittes und damit zu einer wirkungsvollen Ausbildung von Scherkräften, welche bereits die Zerkleinerung der schmelzflussigen Teilchen begünstigen. Dadurch, daß unmittelbar anschließend die Kühlkammer vorgesehen ist, kann insbesondere dann, wenn die Schmelze in hohem Maße mit Schwefelwasserstoffen oder anderen Gasen (z.B. Luft, CO₂, N₂) gesättigt ist, eine rasche Desintegration unter Erzielung besonders kleiner Teilchen erzielt werden, wobei im Mantel des Kühlraumes oder aber im Kühlraum selbst durch Eindüsen von Hochdruckwasser eine entsprechende Wasserdampfmenge gebildet werden kann, welche den hydraupneumatischen Abtransport des Feingranulates ohne zusätzliches Gaseinbringen ermöglicht. Die Quenchkammer bzw. Kühlkammer kann hiebei unter einem Druck von 0 bis 5 bar gehalten werden, wobei in die Kühlkammer gegebenenfalls auch Kohlenwasserstoffe zum Zwecke der raschen Abkühlung eingedüst werden können. Mit Vorteil ist die Ausbildung hiebei so getroffen, daß im Bereich der Mündung des Schmelzzyklones zur Achse der Mündung gerichtete Wasserdüsen angeordnet sind, wobei vorzugsweise in den Kühlraum Anschlüsse für Wasserdampf, Kohlenwasserstoffe und/oder Kohlewassergemische münden.

In besonders vorteilhafter Weise ist die Ausbildung so getroffen, daß der Schmelzzyklon wassergekühlte Wände aufweist, wodurch auch im Bereich des Schmelzzyklons bereits Wasserdampf gebildet werden kann, welcher in der Folge als Transporter zum Einsatz gelangen kann, oder thermisch abgearbeitet werden kann.

Bei Verwendung von Hochdruckwasser zum Kühlen der Schlackenpartikel gelingt es insbesondere bei einem Wasserdruck zwischen 100 und 300 bar Zerkleinerungen auf Partikeldurchmesser von weit unter 300 µ zu erzielen, so daß mit derartig zerkleinerten Partikel eine hydropneumatische Abförderung ohne weiteres gelingt. Der Austrag kann hiebei über ein Zellenrad oder ein Sichterrad erfolgen, so daß unmittelbar Material mit einer Mahlfeinheit von bis zu 6000 Blaine (cm² pro g) aus dem Kühlraum ausgetragen werden kann. Der Mikrogranulatstrom kann in der Folge nach dem Ausschleusen aus der Kühlkammer an Luft gekühlt oder gegebenenfalls unter Anwendung von Innertgasen weitergekühlt werden, um eine Hydratisierung und damit eine Verschlechterung der hydraulischen Eigenschaften des Produktes zu verhindern.

Die Verwendung des Schmelzzyklons erlaubt es, Schlacken in einer Weise miteinander zu vermischen, daß unmittelbar die gewünschte Schlackenzusammensetzung erzielt wird, und vor allen Dingen auch Abfallstoffe in die flüssigen Schlacken homogen einzubinden, wobei insbesondere Schlacken zum Einsatz gelangen können, welche in der Regel nicht mehr in schmelzflüssiger Form zur Verfügung stehen und weitestgehend beliebiger Provenienz sein können.

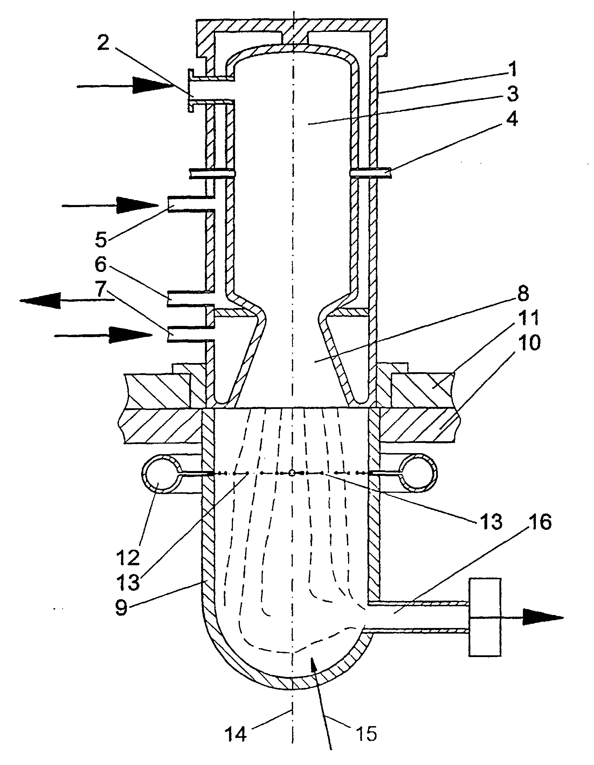

Die Erfindung wird nachfolgend an Hand einer in der Zeichnung schematisch dargestellten Vorrichtung zur Durchführung des erfindungsgemäßen Verfahrens näher erläutert.

In der Zeichnung ist mit 1 ein Schmelzzyklon bezeichnet, welcher über eine Aufgabeöffnung 2 für die Aufgabe von vorzerkleinerten Schlacken oder Aschen verfügt. Das vorzerkleinerte feste Material kann hiebei pneumatisch in den Schmelzzyklon 1 gefördert werden, wobei im Inneren des Schmelzzyklons 1 eine Brennkammer 3 ausgebildet ist. Zusätzliche Brennstoffe, soweit sie nicht gleichzeitig mit den eingebrachten Feststoffen eingebracht wurden, können über Leitungen 4 eingedüst werden. Der Schmelzzyklon verfügt weiters über einen Anschluß 5 für die Zufuhr von Kühlwasser und einen Anschluß 6 für die Ableitung von Kühlwasser im Bereich der Wandung des Schmelzzyklons. Weitere Kühlwasserzuführungen 7 sind für den Bereich der sich konisch erweiternden Austrittsöffnung 8 des Schmelzzyklons vorgesehen, wobei die Ableitung des Kühlwassers über eine gesonderte Leitung erfolgt.

An die Austrittsöffnung 8 bzw. Mündung des Schmelzzyklons ist eine Kühlkammer 9 unmittelbar angeflanscht, wobei der Flansch der Kühlkammer mit 10 und der Flansch des Schmelzzyklons mit 11 bezeichnet ist. Die Brennkammer 3 des Schmelzzyklons wird unter einem Druck von 2 bis 10 bar gehalten, wobei die nachfolgende Kühlkammer 9 in der Regel unter einem Druck von 0 bis 5 bar gehalten wird. Im Bereich der Mündung der Austrittsöffnung 8 des Schmelzzyklons ist eine Ringleitung 12 für Hochdruckwasser vorgesehen, wobei die Achsen der Austrittsdüsen 13 für das Hochdruckwasser im wesentlichen radial orientiert sind und die Längsachse 14 des Schmelzzyklons bzw. des angeschlossenen Kühlraumes bzw. der Kühlkammer 9 schneiden.

Im Inneren der Kühlkammer 9 erstarrt das zerstäubte Material zu überaus kleinen Teilchen, wobei die Wände der Kühlkammer 9 mit Hochdruckwasser oder Dampf gekühlt sein können, um auf diese Weise eine Strahlungskühlung zu bewirken. Über schematisch mit 15 angedeutete Düsen können Kohlenwasserstoffe zur rascheren Abkühlung des erstarrten Materials eingedüst werden, wobei das gebildete Feingranulat über die Austragsöffnung 16 gemeinsam mit den Abgasen pneumatisch abgefördert werden kann.

## Patentansprüche

1. Verfahren zum Zerkleinern von Schlacken, bei welchem die Schlacken geschmolzen und in einen Kühlraum zerstäubt und granuliert werden, **dadurch gekennzeichnet, daß** die festen Schlacken in einem druckfest verschließbaren Schmelzzyklon erschmolzen werden und daß die geschmolzene Schlacke unmittelbar aus dem Schmelzzyklon mit dem im Schmelzzyklon ausgebildeten Gasdruck über eine Düse mit sich in Strömungsrichtung vergrößerndem Querschnitt zerstäubt in einen Kühlraum ausgestoßen wird, wobei der Kühlraum unter geringerem Druck als der Schmelzzyklon auf einem Druck zwischen 0 und 5 bar gehalten wird und zerkleinerte erstarrte Schlacke gesammelt wird.

2. Verfahren nach Anspruch 1, **dadurch gekennzeichnet, daß** der Schmelzzyklon mit Abfallbrennstoffen, wie z.B. Abfällen aus der Papierindustrie, beheizt wird.

3. Verfahren nach Anspruch 1 oder 2, **dadurch gekennzeichnet, daß** in den Schmelzzyklon Schmelzasche kalorischer Kraftwerke und/ oder kalte Hochofenschlacke eingebracht wird.

4. Verfahren nach Anspruch 1, 2 oder 3, **dadurch gekennzeichnet, daß** die Körnung der im Schmelzzyklon eingesetzten Schlacken oder Aschen kleiner 10 mm, vorzugsweise kleiner 4 mm gewählt wird.

5. Vorrichtung zur Durchführung des Verfahrens nach einem der Ansprüche 1 bis 4, **gekennzeichnet durch** einen Schmelzzyklon (1) mit einer sich von einer engsten Stelle zur Mündung vergrößernden Austragsöffnung (8), an welche eine Kühlkammer (9) druckfest angeschlossen, insbesondere angeflanscht ist.

6. Vorrichtung nach Anspruch 5, **dadurch gekennzeichnet, daß** im Bereich der Mündung des Schmelzzyklones (1) zur Achse (14) der Mündung gerichtete Hochdruck-Wasserdüsen (13) angeordnet sind.

7. Vorrichtung nach einem der Ansprüche 5 bis 6, **dadurch gekennzeichnet, daß** in den Kühlraum (9) Anschlüsse für Wasserdampf, Kohlenwasserstoffe und/oder Kohlewassergemische münden.

8. Vorrichtung nach einem der Ansprüche 5 bis 7, **dadurch gekennzeichnet, daß** der Schmelzzyklon (1) wassergekühlte Wände aufweist.

## Claims

1. A process for comminuting slags, in which the slags are melted and atomised in a cooling chamber and pelletised, **characterised in that** the solid slags are melted in a melting cyclone closable in pressure-tight manner and that the molten slags are directly discharged in atomised form from the melting cyclone with the gas pressure generated in the melting cyclone into a cooling chamber via a nozzle with a cross-section which flares outward in the direction of flow, wherein the cooling chamber is maintained at a lower pressure than the melting cyclone, at a pressure of between 0 and 5 bar, and comminuted solidified slag is collected.

2. A process according to claim 1, **characterised in that** the melting cyclone is heated with waste fuels, such as for example paper industry waste.

3. A process according to claim 1 or 2, **characterised in that** melt ash from thermal power stations and/or cold blast furnace slag are/is introduced into the melting cyclone.

4. A process according to claim 1, 2 or 3, **characterised in that** the selected grain size of the slags or ashes used in the melting cyclone is less than 10 mm, preferably less than 4 mm.

5. An apparatus for the performance of the process according to one of claims 1 to 4, **characterised by** a melting cyclone (1) with a discharge orifice (8) which flares out from a narrowest point to a mouth, to which orifice (8) a cooling chamber (9) is attached, in particular by means of flanges, in pressure-tight manner.

6. An apparatus according to claim 5, **characterised in that** there are arranged in the mouth area of the melting cyclone (1) high pressure water nozzles (13) which are directed towards the axis (14) of the mouth.

7. An apparatus according to one of claims 5 to 6, **characterised in that** connections for steam, hydrocarbons and/or carbon-water mixtures open into the cooling chamber (9).

8. An apparatus according to one of claims 5 to 7, **characterised in that** the melting cyclone (1) has water-cooled walls.

## Revendications

1. Procédé destiné à fragmenter des scories, d'après lequel on fait fondre les scories et on les pulvérise dans une chambre de refroidissement et les transforme en granulés, **caractérisé en ce que** l'on fait fondre les scories solides dans un cyclone de fusion pouvant être fermé résistant à la pression, et **en ce que** les scories fondues sont expulsées dans une chambre de refroidissement, directement à partir du cyclone de fusion, par la pression de gaz établie dans le cyclone de fusion, en étant pulvérisées par l'intermédiaire d'une buse présentant une section transversale augmentant dans la direction de l'écoulement, la chambre de refroidissement étant maintenue sous une pression plus faible que le cyclone de fusion, entre 0 et 5 bar, et les scories fragmentées solidifiées étant collectées.

2. Procédé selon la revendication 1, **caractérisé en ce que** le cyclone de fusion est chauffé à l'aide de combustibles à base de déchets, par exemple des déchets de l'industrie du papier.

3. Procédé selon la revendication 1 ou 2, **caractérisé en ce que** l'on envoie dans le cyclone de fusion, des cendres de fusion de centrales thermiques et/ou des scories froides de hauts fourneaux.

4. Procédé selon la revendication 1, 2 ou 3, **caractérisé en ce que** la granulométrie des scories ou cendres mises en oeuvre dans le cyclone de fusion est choisie inférieure à 10 mm, de préférence inférieure à 4 mm.

5. Dispositif pour la mise en oeuvre du procédé selon l'une des revendications 1 à 4, **caractérisé par** un cyclone de fusion (1) comportant une ouverture d'évacuation (8), qui s'agrandit à partir d'un endroit le plus étroit en direction de l'orifice de sortie, et à laquelle se raccorde, notamment par une liaison par bride, une chambre de refroidissement (9) résistant à la pression.

6. Dispositif selon la revendication 5, **caractérisé en ce que** dans la zone de l'orifice d'évacuation du cyclone de fusion (1) sont disposées des buses d'eau sous haute pression (13) dirigées vers l'axe (14) de l'orifice d'évacuation.

7. Dispositif selon l'une des revendications 5 à 6, **caractérisé en ce que** dans la chambre de refroidissement (9) débouchent des raccords pour de la vapeur d'eau, des hydrocarbures et/ou des mélanges carburés.

8. Dispositif selon l'une des revendications 5 à 7, **caractérisé en ce que** le cyclone de fusion (1) présente des parois refroidies par eau.
